# EUROPÄISCHE PATENTANMELDUNG

(11) **EP 0 935 044 A2**
(43) Veröffentlichungstag der Anmeldung: **11.08.1999**
(21) Anmeldenummer: 99101887.0
(22) Anmeldetag: 28.01.1999
(51) Int. Cl.: E05F 15/20

(54) **Verfahren und Vorrichtung zur Ansteuerung und/oder Überwachung eines motorisch angetriebenen Flügels**

(30) Priorität: 05.02.1998 DE 19804632
(71) Anmelder: agta record ag, 8320 Fehraltorf (CH)
(72) Erfinder: Minder, Hans, 8305 Dietlikon (CH)
(74) Vertreter: Flach, Dieter Rolf Paul, Dipl.-Phys.

(57) **Zusammenfassung**

Ein Verfahren zur Ansteuerung und/oder Überwachung eines angetriebenen Flügels, insbesondere einer Tür, eines Fensters oder dergleichen sowie eine zugehörige Vorrichtung zeichnet sich vor allem dadurch aus, daß die Öffnungsbewegung eines Flügels (1a, 1b) sowie eine Unterbrechung des Schließvorganges des Flügels (1a, 1b) und/oder eine Umsteuerung hin zu einer erneuten Öffnungsbewegung desselben in Abhängigkeit des gemessenen und/oder ermittelten Abstandes (X) zwischen dem im Überwachungsbereich (19) dedektierten Objekt und der Sensoreinrichtung (9, 9', 9a, 9b) bzw. dem Flügel (1a, 1b) oder der Flügelebene erfolgt, wobei alternativ oder ergänzend auch die Steuerung in Abhängigkeit der Bewegungsrichtung und/oder in Abhängigkeit der Größe der Abstandsänderung in der Zeiteinheit durchführbar ist.

## Beschreibung

Die Erfindung betrifft ein Verfahren sowie eine Vorrichtung zur Ansteuerung und/oder Überwachung eines motorisch angetriebenen Flügels, insbesondere einer Tür, eines Fensters oder vergleichbarer Einrichtungen. Dazu sind üblicherweise nachfolgend auch als Erfassungs- und Überwachungsmittel bezeichnete Einrichtungen vorgesehen, wie sie auch unter den Begriffen "Sensoren" allgemein oder beispielsweise "Bewegungsmelder" im besonderen bekannt sind. Ferner ist üblicherweise eine Auswert- und Steuerungseinrichtung vorgesehen, die getrennt oder gemeinsam aufgebaut sein kann. Darüber wird letztlich der Antrieb eines Flügels gesteuert.

Die nachfolgend allgemein auch als Sensoren bezeichneten Überwachungs- und Erfassungsmittel, wie sie üblicherweise zur Steuerung und Überwachung von Türen eingesetzt werden, unterscheiden sich im Hinblick auf ihre technische Funktion und/oder Anwendung.

Bewegungsmelder arbeiten dabei üblicherweise nach dem Doppelprinzip, d.h. daß ein Signal in den Überwachungs- und Auslösebereich der zu überwachenden Tür (gleichgültig ob es sich um eine Flügeltür, eine. Schiebetür, Karusselltür oder dgl. handelt) abgestrahlt und die reflektierte Strahlung empfangen und ausgewertet wird. Fällt die Strahlung auf eine bewegte Person, so ergibt sich in Abhängigkeit der Relativbewegung der bewegten Person auf den Strahler zu oder von diesem weg eine Frequenzverschiebung. Grundsätzlich können derartige Bewegungsmelder auf der Basis von Ultraschall, Infrarotstrahlung oder nach dem Radarprinzip arbeiten.

Daneben sind auch sogenannte Zustandsmelder bekannt, die, ebenfalls auf unterschiedlichen technischen Prinzipien basierend, häufig im Infrarotbereich arbeiten. Dabei sind in der Regel Zustandsmelder bekannt, die die sogenannte Passiv-Infrarotstrahlung auswerten. Durch Messung der im Überwachungs- und Auslösebereich abgegebenen Strahlung durch die Sensoren und Detektoren kann in Abhängigkeit der sich verändernden Intensität der Strahlung eine entsprechende Auswertung und Ansteuerung der zu öffnenden und zu schließenden Tür vorgenommen werden.

Ferner sind auch sogenannte Präsens-Detektoren, insbesondere zum Absichern von Quetsch und Scherkanten bekannt. Der einfachste Detektor dieser Art ist die sogenannte Lichtschranke, die beispielsweise bei Schiebetüranordnungen zur Absicherung eingesetzt wird. Weiterhin ist eine Reihe von Geräten, Tastern und Tastsensoren bekannt, die häufig auf der Aktiv-Infrarot-Technik basieren. Ebenso sind in diesem Bereich auch Geräte mit Ultraschall, Lasertechnik und Bilderkennung (CCD) anzutreffen.

Da die vorstehend genannten Präsensdetektoren teurer als Bewegungsmelder sind und zudem auch nur ein sehr begrenztes Erfassungsfeld, d.h. ein sehr begrenztes Überwachungs- und Auslösefeld aufweisen, sind auch schon kombinierte Steuerungs- und Überwachungseinrichtungen und -geräte vorgeschlagen worden, die einen Bewegungsmelder und einen Aktiv-Infrarot-Taster enthalten.

Alle bisherigen Überwachungs- und Steuerungseinrichtungen für bewegte Flügel, insbesondere Türen, weisen aber stets den Nachteil auf, daß entweder der Überwachungs- und Auslösebereich nicht ideal gewählt ist, wenn nämlich insbesondere in dem zu überwachenden Bereich noch sogenannte Totzonen vorhanden sind, oder aber die Gefahr einer Selbstauslösung der Tür besteht.

Aufgabe der vorliegenden Erfindung ist es von daher ein verbessertes Verfahren sowie eine zugehörige Vorrichtung zur Ansteuerung und/oder Überwachung eines angetriebenen Flügels, insbesondere einer Tür oder dgl. zu schaffen.

Die Aufgabe wird erfindungsgemäß bezüglich des Verfahrens entsprechend den im Anspruch 1, 2 oder 3 und bezüglich der Vorrichtung entsprechend den im Anspruch 6, 7 oder 8 angegebenen Merkmalen gelöst. Vorteilhafte Ausgestaltungen der Erfindung sind in den Unteransprüchen angegeben.

Das Hauptproblem bei Sensoren und Bewegungsmeldern nach dem Stand der Technik sind Störungen, die durch Selbstauslösung verursacht werden. Bei einem schlecht eingestellten Sensor kann die sich schließende Tür einen Öffnungsimpuls auslösen, der die Tür wieder öffnet bevor sie ganz geschlossen ist. Eine solche Tür kommt also nie mehr zur Ruhe, da sie ständig vor Erreichen der endgültigen Schließstellung wieder in Öffnungsstellung zurückverfahren wird.

Es wird häufig versucht, derartige beispielsweise durch eine schlechte Antennencharakteristik und/oder durch vorhandene Reflexionen provozierte Selbstauslösungen der Tür durch Verstellung und/oder unterschiedliche Ausrichtung des Sensors oder Bewegungsmelders zu unterbinden, beispielsweise dadurch, daß dessen Antenne verstellt und/oder dessen Seitenkeulen durch optimale Montage der Aufputzgeräte abgeschirmt werden. Dies hat aber zwangsläufig auch zur Folge, daß der Überwachungs- und Auslösebereich verkleinert wird, so daß in gefährlichen Randbereichen unerwünschte Totzonen entstehen können, in denen keine Personensicherheit mehr gewährleistet ist.

Demgegenüber schlägt die vorliegende Erfindung vor, nicht herkömmliche Sensoren und Bewegungsmelder zu verwenden, sondern einen sogenannten Distanzsensor. Mittels dieses Distanzsensors ist es möglich, den Abstand zu einem dedektierten Objekt stets zu messen und zu überwachen.

Sollte sich ein bewegtes Objekt in einer von dem Distanzsensor überwachten Überwachungs- und Auslösezone in einem Mindestabstand der Tür nähern (in der Regel ein Mindestabstand zum Sensor), so wird über die Vorrichtung zur Ansteuerung und/oder Überwachung des motorisch antreibbaren Türflügels die Tür sofort geöffnet (falls sie zuvor geschlossen war) oder während eines Schließvorganges wieder erneut geöffnet bzw. wenn die Tür sich im Öffnungsstatus befand und kurz vor Beginn einer erneuten Schließbewegung stand, der geöffnete Zustand weiter behalten.

In einer Weiterbildung der Erfindung ist vorgesehen, daß zumindest zwei Sensoreinrichtungen vorgesehen sind. Dabei kann die Sensoreinrichtung zum einem einen Distanzsensor - wie bereits eben beschrieben - umfassen, wobei zum anderen die weitere Sensoreinrichtung aus einem Richtungserkennungssensor oder einem weiteren zum ersten Sensor versetzt liegenden zweiten Sensor bestehen kann.

Durch zwei in Draufsicht zur Auslöse- und Überwachungszone und zur Türdurchbruchsebene versetzt liegende Distanzsensoren kann nämlich nicht nur die Distanz zu einem Objekt, sondern auch dessen Richtung bezogen auf die Tür erkannt und dedektiert werden.

Dadurch kann in mehrfacher Hinsicht eine optimierte Überwachung der Schließ- und Öffnungsfunktion der Tür bewerkstelligt werden. Denn durch die Verwendung der beiden vorstehend beschriebenen Sensoren ist es beispielsweise möglich, eine Überwachungszone relativ groß festzulegen, wobei die Auslösezone demgegenüber kleiner dimensioniert ist und eine beliebige Form annehmen kann. Denn die Auslöseform kann beispielsweise eine Rechteckform, eine Polygonalform, eine Kreissegmentform, eine Ovalform etc. aufweisen. Die äußeren Umrißlinien einer derartigen Auslösezone werden lediglich durch mathematische Funktionen bestimmt. Hat ein dedektiertes bewegtes Objekt diese Auslösezone betreten, so kann die Tür sofort in Öffnungsstellung gebracht oder im Fall einer Schließbewegung gestoppt und wieder sofort in Öffnungsstellung umgesteuert werden.

Durch die Distanzmessung ist es vor allem aber auch möglich in Abhängigkeit weiterer Kriterien im Überwachungsbereich die Türen dann nicht zu öffnen oder eine Schließbewegung selbst dann durchzuführen, wenn sich das dedektierte Objekt in der Überwachungs- und Auslösezone befindet. Bevorzugt wird dazu stets ein Minimalabstand zur Türebene über die Sensoreinrichtung ermittelt. Solange dieser Minimalabstand von der bewegten dedektierten Person nicht unterschritten wird, findet eine Öffnungsbewegung der Tür oder eine Unterbrechung der Schließbewegung der Tür mit nachfolgender Umsteuerung und Öffnungsstellung nicht statt.

Die Erfindung ermöglicht es aber auch die Türsteuerung anhand von dynamischen Größen zu bewerkstelligen.

So ist es möglich, in diskreten Schritten (möglichst kurze Zeiteinheiten) oder kontinuierlich die in der Überwachungs- und Auslösezone befindlichen Objekte zu dedektieren und zumindest nicht nur in Abhängigkeit vom absoluten Minimalabstand zur Tür oder zur Türebene allein, sondern auch in Abhängigkeit von einer Veränderung des absoluten Minimalabstandes zur Tür oder zur Türebene, eine Öffnungsbewegung oder eine Unterbrechung der Schließbewegung mit nachfolgendem Öffnen durchzuführen.

Genauso kann aber auch eine vektorielle Bestimmung der Bewegungsbahn und -geschwindigkeit der bewegten Objekte in der Auslösezone ermittelt werden. Nur dann, wenn der Vektor mit ausreichender Komponente auf die Tür zu gerichtet ist, kann automatisch durch die Elektronik der Vorrichtung entschieden werden die Tür zu öffnen oder einen Schließvorgang zu unterbrechen.

So ist es in einer bevorzugten Weiterbildung der Erfindung möglich, daß bei einer dedektierten Person, die sich entsprechend der dedektierten Bewegungsbahn im wesentlichen direkt auf die Tür zu bewegt und/oder sich mit einer Geschwindigkeit oberhalb einer Mindestgeschwindigkeit der Tür nähert, in Abhängigkeit dieser Daten der jeweilige Türflügel früher geöffnet wird, als in solchen Fällen, bei denen sich eine Person sogar im geringeren Abstand zu einer Tür befindet, sich dabei jedoch der Tür langsamer nähert oder sogar an der Tür mehr oder weniger parallel vorbeiläuft.

Die vorstehend erläuterten Vorteile lassen sich auch dann erzielen, wenn eine Distanzsensor- und eine Winkelsensoreinrichtung verwendet werden.

Alle Punkte, die von einem die Distanz messenden Sensor gleich weit entfernt sind, befinden sich auf einer Kugelfläche. Von daher sollte die Auswertung so eingerichtet sein, daß die entsprechenden Daten in Höhe der zu dedektierenden Person richtig und vollständig erfaßt werden. Möglich ist auch die Anbringung von Sensoren oder Distanzsensoren (zumindest ergänzend zu den oben erwähnten Hauptsensoren) an den verstellbaren Türflügeln selbst (oben, unten, an der Schließkante und/oder an der dazu gegenüberliegenden Außenkante, in Form eines über der Tür sich längserstreckenden Sensorbalkens mit mehreren einzelnen Sensoren, in Form von seitlich vom Türbruch angeordneten Vertikalbalken sowie beidseitig einer Türöffnung, um beide Bereiche der automatisch betätigbaren Tür zu überwachen).

Die Distanzsensoren sind bevorzugt so aufgebaut, daß mit ihnen auch innerhalb der Überwachungs- und Auslösezone statische Objekte überwacht werden können. Es kann beispielsweise - wenn ein Minimalabstand nicht unterschritten ist - eine Tür, die sich zunächst geöffnet hat (weil eine bewegte Person sich schnell und zielstrebig direkt auf die Tür zubewegt hat) wieder geschlossen werden, weil die sich zunächst schnell der Tür nähernde Person ihren weiteren Gang unterbrochen hat (weil beispielsweise eine zweite Person vor dem Türbereich getroffen wurde) - Erst dann, wenn diese in der Auslösezone dedektierte Person sich wieder erneut in Richtung Tür bewegt, wird die Tür in Öffnungsstellung umgesteuert.

Vor allem bietet die Erfindung auch die Möglichkeit, daß über die erwähnten Sensoren auch bestimmte bewegte Objekte ausgeblendet werden können, beispielsweise die bewegten Türflügel selbst. Dies kann durch einen Datenabgleich von vorabgespeicherten Daten (beispielsweise bei einem Teach-In-Verfahren) mit den jeweils aktuell gemessenen Sensorsignaldaten erfolgen.

Die Erfindung eignet sich bei allen Arten von gesteuert bewegten Flügeln, insbesondere Schiebetürflügeln mit einem, zwei oder beispielsweise drei Türflügeln, ebenso aber auch im Falle von Schwenkflügeln wie Schwenktüren etc.

Die Erfindung wird nachfolgend anhand von Zeichnungen näher erläutert. Dabei zeigen im einzelnen:
- Figur 1 :: eine schematische Frontansicht einer zweiflügeligen Schiebetüranordnung mit Sensoreinrichtung;
- Figur 2 :: eine schematische Horizontalschnittdarstellung durch das Ausführungsbeispiel gemäß Figur 1 mit einem Überwachungs- und einem Auslösebereich;
- Figur 3 :: eine schematische Schaltungsanordnung unter Einbezug einer Sensoreinrichtung und einer Antriebseinrichtung;
- Figur 4 :: ein Diagramm zur Erläuterung der Arbeitsweise der Auswertelektronik;
- Figur 5 :: eine entsprechende Darstellung zu Figur 2 im Falle eines abgewandelten Ausführungsbeispieles; und
- Figur 6 :: eine zu Figur 3 abgewandelte Schaltungsanordnung insbesondere bei Verwendung zweier versetzt zueinander angeordneter Distanzsensoren 9.

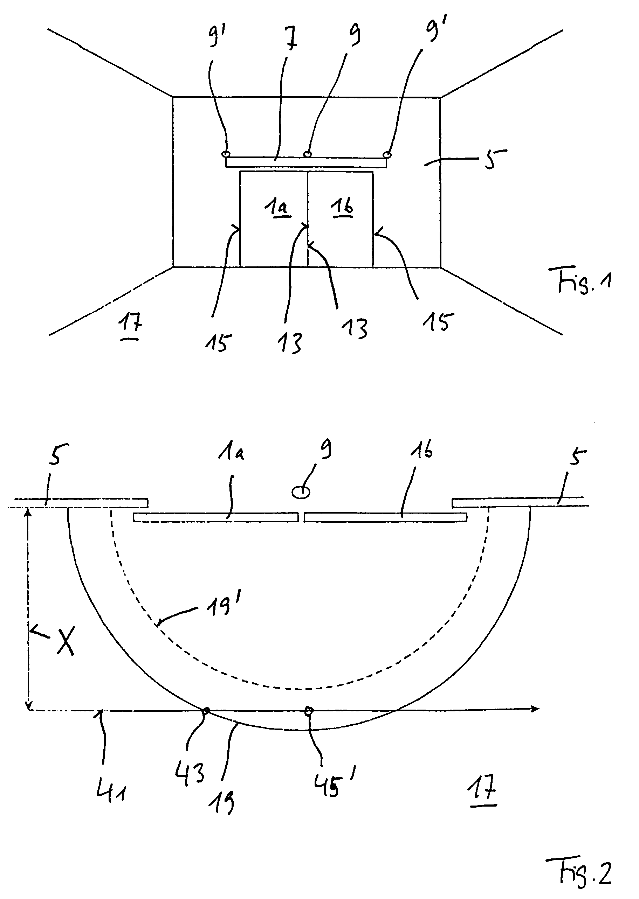

In Figur 1 ist in schematischer Darstellung eine zweiflügelige Schiebetür 1 mit zwei Türflügeln 1a und 1b im geschlossenen Zustand gezeigt. Die Tür ist in einer Wand 5 vorgesehen.

Die Türflügel werden in bekannter Weise über eine oberhalb des Türdurchbruches horizontal verlaufende und in Figur 1 mit dem Bezugszeichen 7 bezeichnete Laufschiene verfahrbar gehalten und über beispielsweise einen nicht näher gezeigten Elektromotor unter Zwischenschaltung eines umlaufenden Zahnriemens zwischen Öffnungs- und Schließstellung verfahren.

Im gezeigten Ausführungsbeispiel sind oberhalb eines Türdurchbruches in einer Wand 5, d.h. im Bereich der Aufhäng- und Laufanordnung zwei verfahrbare Türflügel 1a und 1b sowie eine Sensoreinrichtung 9 vorgesehen. Die Sensoreinrichtung ist in diesem Ausführungsbeispiel bevorzugt mittig oberhalb des Türdurchbruches angeordnet. Unter Sensoranordnung bzw. Sensoreinrichtung 9 werden alle geeigneten Überwachungs- und/oder Erfassungseinrichtungen verstanden, mit denen in technischer Hinsicht sich bewegende Gegenstände, insbesondere Personen erfaßt oder dedektiert werden können. Abweichend von dieser Sensoranordnung 9 können auch mehrere einzelne Sensoren 9^{'} über einen größeren Teil der Breite der Tür oder über die gesamte Türbreite oder darüberhinausgehend bwz. ein durchgängiger Sensorbalken vorgesehen sein. Ergänzend und alternativ können die Sensoren auch auf den Türflügeln selbst oben mittig und/oder unten und/oder eher an den Schließkanten 13 und/oder an den jeweils gegenüberliegenden Außenkanten 15 und/oder an der Wand 5 selbst (beispielsweise auch über eine vertikale Wegstrecke verlaufend, z.B. als Vertikalbalken) vorgesehen oder angeordnet sein.

Die, einen einzelnen Sensor 9 oder mehrere Sensoren 9, 9', beispielsweise in Form von Infrarotsensoren oder Radarsensoren etc., umfassende Sensoranordnung 9 ermöglicht es, beispielsweise den vor der Tür befindlichen und auf dem Boden 17 (Figur 2) strichliert gezeichneten Überwachungs- und Auslösebereich 19 zu überwachen.

Nähert sich eine Person der Tür und kommt in den Bereich der Überwachungs- und Auslösezone 19, so wird über die Sensoranordnung (bei einem Radarsensor in Form der empfangenen, vom Objekt reflektierten Strahlen; im Falle eines Infrarotsensors durch die Infrarotstrahlung) ein entsprechendes Signal empfangen, welches entsprechend der schematischen Schaltungsanordnung nach Figur 3 in einer Auswertstufe 23 ausgewertet und in einer nachfolgenden Steuerungsstufe 25 umgesetzt wird, um eine Antriebsanordnung 27 zum Öffnen der Schiebetür 1 anzusteuern. Abweichend zu Figur 3 kann die Auswert- und Steuerungsstufe 23, 25 auch zu einer einheitlichen Stufe 24 zusammengefaßt sein. Sie kann entweder hartverdrahtet aufgebaut sein, besteht aber vorzugsweise aus einer mikroprozessorgesteuerten Elektronik.

Wie anhand der Darstellung gemäß den Figuren 1 und 2 zu sehen ist, ist die Überwachungs- und Auslösezone 19 so groß gewählt, daß sie den gesamten Türbereich über die Türflügel 1a und 1b im geschlossenen Zustand hinaus überwacht, so daß keine oder keine relevanten Totzonen entstehen und selbst sich sehr stark seitlich auf die Tür zubwegende Personen frühzeitig erkannt werden können.

Bei einem Distanzsensor 9 ergibt sich eine halbkreisförmige Überwachungs- und Auslösezone 19, wenn der Sensor mittig zur Tür angeordnet ist. Die in Figur 2 wiedergegebene Auslösezone 19 muß dabei nicht zwingend in der Größendarstellung im Bodenbereich vorgesehen sein. Da der Distanzsensor stets die Distanz mißt, ergibt sich eine im Raum kugelförmige räumliche zu überwachende Auslösezone, die so bemessen ist, daß auch im Bodenbereich oder in geringem Abstand darüber eine noch groß genug bemessene Auslösezone insgesamt gegeben ist. Anhand von Figur 4 ist schematisch das Prinzip der Auswertung angedeutet.

In dem in Figur 4 wiedergegebenen Diagramm ist auf der X-Achse die Zeiteinheit t und auf der Y-Achse der absolute Distanzabstand d zum Sensor 9 eingezeichnet.

Die Auswertung in der Auswert- und Steuerungselektronik 23, 25 kann derart erfolgen, daß beispielsweise die motorisch angetriebene Schiebetür gemäß Figur 1 und 2 erst dann in Öffnungsstellung geschaltet bzw. bei einem Schließvorgang wiederum in Öffnungsstellung umgesteuert wird, wenn ein dedektiertes Objekt den in Figur 3 strichliert eingezeichneten engeren Auslösebereich 19' betritt, obgleich der eigentliche Überwachungsbereich 19 entsprechend der durchgezogenen Linie in Figur 3 größer ist.

Sollte sich beispielsweise eine Person etwa parallel zur Wand- oder Türebene längs der Linie 41 bewegen, so wird dieses Objekt an dem Punkt 43 von der Sensoreinrichtung erstmals erkannt. In Figur 2 ist während der weiteren Bewegungsbahn der jeweils über die Auswert- und Steuerungselektronik 23, 25 ermittelte Mindestabstand X zur Türebene dargestellt. Solange dabei der Minimalabstand nicht kleiner wird als der vorgebbare Minimalabstand in Form eines engeren Auslösekreises 19', kann mittels der elektronischen Vorrichtung entschieden werden, die Tür nicht in Öffnungsstellung umzustellen.

Mit der erläuterten Vorrichtung ist aber nicht nur eine statische Auswertung - wie anhand von Figur 3 bezüglich des absoluten Abstandes zum Sensor dargestellt ist - möglich, sondern auch eine dynamische Auswertung, die zumindest ergänzend wenn nicht alternativ zur statischen Auswertung vorgenommen werden kann.

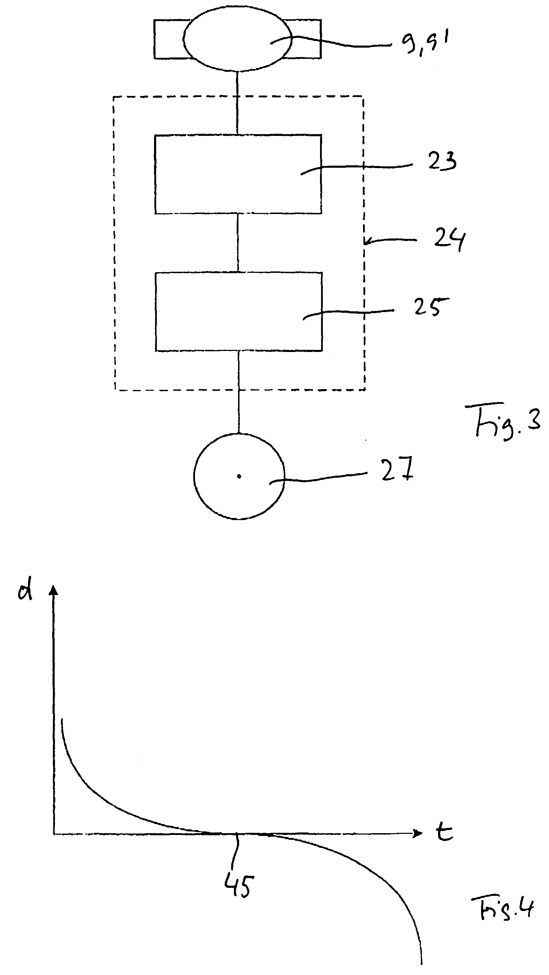

Unter einer dynamischen Auswertung werden abgeleitete Größen verstanden, wie z.B. die Geschwindigkeit, mit der das dedektierte Objekt sich der Tür bzw. der Sensoreinrichtung 9 nähert. Bei der Bewegungsbahn gemäß Linie 43 in Figur 3 ergibt dies gemäß Figur 5 in einem aus der t-Zeitachse und der Geschwindigkeit-V-Achse gebildeten Diagramm eine Kurve, die an dem Punkt 45 einen Nulldurchgang aufweist. Dieser Punkt 45 entspricht der Stelle 45' in Figur 2, bei welcher die Geschwindigkeit, mit der sich die bewegte Person dem Sensor nähert, Null geworden ist. Danach nimmt der Abstand zur Sensoreinrichtung 9 wieder zu, weshalb die Geschwindigkeit im Diagramm gemäß Figur 4 Negativwerte einnimmt.

In der Auswert- und Steuerungselektronik 23, 25 kann nunmehr in Abhängigkeit des absoluten gemessenen Abstandes zwischen dedektiertem Objekt und Sensoreinrichtung 9 zumindest in Verbindung mit der daraus abgeleiteten Geschwindigkeit, mit der sich ein dedektiertes bewegtes Objekt der Tür nähert, entschieden werden, ob die Tür früher oder später geöffnet werden muß.

Anhand von Figur 5 wird ein abgewandeltes Ausführungsbeispiel beschrieben, bei welchem im wesentlichen parallel zu der den Türdurchbruch aufnehmenden Wand 5 beispielsweise oberhalb der Tür zwei quer und symmetrisch zur Vertikalmittellinie des Türdurchbruches versetzt angeordnete Distanzsensoren 9' angeordnet sind.

Durch die gleichzeitige Messung und Auswertung der beiden Distanzsensoren 9a, 9b kann jederzeit nicht nur der Abstand einer dedektierten Person und/oder eines Objektes, sondern auch seine Relativlage zur Tür ermittelt werden.

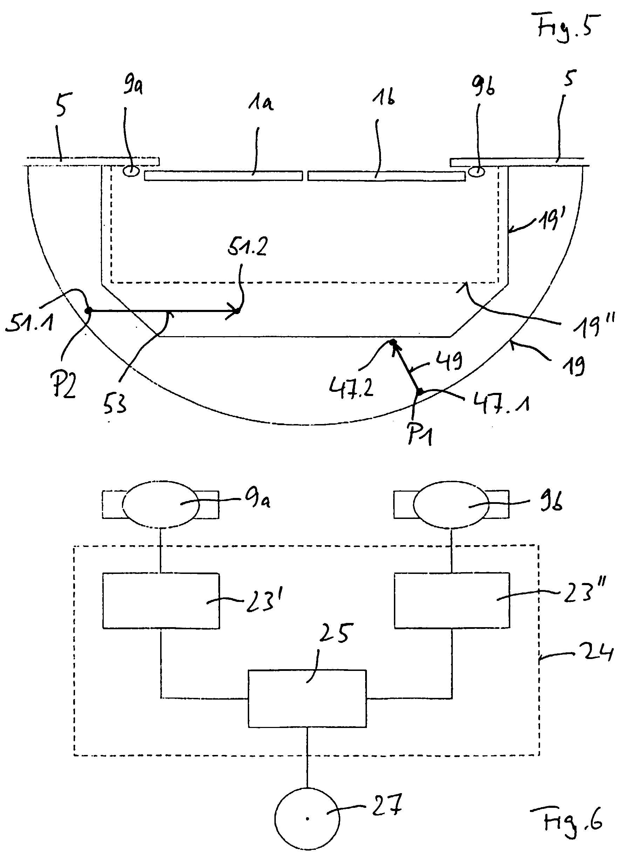

Denn die Auswert- und Steuerungselektronik 23, 25 kann bezüglich beider Sensoren 9a, 9b jeweils den Abstand vom betreffenden Sensor 9a bzw. 9b zu einem bewegten Objekt P ermitteln, so daß bei vorgegebenem Abstand zwischen den beiden Sensoren 9a, 9b (die Werte sind in der Auswert- und Steuerungselektronik eingegeben) stets eindeutig die exakte Lage des dedektierten Objektes P ermittelt werden kann. In Figur 6 ist eine insoweit gegenüber Figur 3 leicht abgewandelte und erweiterte Schaltungsanordnung mit zwei Auswertstufen 23', 23'' gezeigt, die der jeweiligen Sensoreinrichtung 9a, 9b zugeordnet sind. Über eine gemeinsame nachfolgende Steuerungselektronik 25 wird dann die Antriebseinrichtung 27 zum Öffnen und Schließen der Tür angesteuert. Abweichend dazu kann auch eine gemeinsame Auswertelektronik 23, wie in Figur 3, vorgesehen und/oder die gesamte Elektronik als gemeinsame Auswert- und Steuerungselektronik 24 aufgebaut sein.

In dem Ausführungsbeispiel gemäß Figur 6 ist gegenüber dem maximal wirksamen Überwachungsbereich 19 ein polygonal gebildeter Auslösebereich 19' festgelegt.

In einer vereinfachten Ausführungsform kann dieser so festgelegt werden, daß eine Öffnung der geschlossenen Tür oder eine Umsteuerung in Öffnungsrichtung (beispielsweise während eines Schließvorganges der Türflügel 1a, 1b) nur dann erfolgt, wenn aufgrund der Abstands- und Relativlage die von den beiden Distanzsensoren 9a, 9b gemessene Lage des dedektierten Objektes P nur innerhalb einer vorfestgelegten Auslösezone 19' liegt. Da durch die Anordnung der versetzt zueinanderliegenden Sensoren 9a, 9b jeder Punkt im Raum bzw. in der Projektion zur Bodenfläche 17 durch das Distanzmaß des betreffenden Raumpunktes zu den beiden Sensoren 9a, 9b festgelegt ist, kann eine exakt vordefinierte Größe oder Fläche mit beliebiger Umrißlinie für die engere Auslösezone 19' festgelegt werden. Die Auswertung kann bei dem Ausführungsbeispiel gemäß Figur 5 so erfolgen, daß die Türen sets öffnen oder eine Schließbewegung stets dann wieder unterbrochen und die Tür in Öffnungsstellung umgesteuert wird, wenn eine Person in den Bereich der engeren Auslösezone 19' gelangt.

Es ist aber auch eine dynamische Ausgestaltung dergestalt möglich, daß beispielsweise bezüglich eines bewegten Objektes P1 zu einem ersten Zeitpunkt dessen Position 47.1 ermittelt wird und zu einem zweiten nachfolgenden Zeitpunkt dessen Position 47.2, so daß daraus ein Vektor 49 gebildet werden kann. Durch die Auswert- und Steuerungselektronik 23, 25 kann sowohl die Richtung des Vektors 49 wie aber auch die Größe des Vektors 49 ausgewertet werden, die ein Maß für die Geschwindigkeit ist. Wenn beispielsweise das Maß der Abstandsverringerung zur Türmitte oder zur Türebene hin ein gewisses Mindestmaß unterschreitet und/oder die Geschwindigkeit, mit der das dedektierte bewegte Objekt P1 sich der Tür nähert, eine gewisse Mindestgeschwindigkeit überschreitet, so kann beispielsweise abweichend von dem in Figur 5 gezeigten engeren Auslösebereich 19' die Tür bereits früher in Öffnungsstellung gesteuert oder umgesteuert werden.

Wird beispielsweise bezüglich eines bewegten Objektes P2 von den Sensoren im seitlichen Abstand erst eine Lage 51.1 und dann eine Lage 51.2 dedektiert, so ergibt sich bei der dynamischen (wie auch bei der statischen) Auswertung ein Vektor 51. Bei diesem Beispiel ändert sich also der Absolutabstand zur Tür bzw. Türebene nicht. In diesem Falle kann bei ausreichendem Minimalabstand zur Türebene beispielsweise eine zweite Auslösezone 19'' wirksam sein, mit der Folge, daß eine Öffnung einer geschlossenen Tür oder eine Umsteuerung beim Schließvorgang wieder hin zum Öffnen der Tür dann unterbleibt, wenn der Mindestabstand zur Tür bzw. Türebene nicht unterschritten und/oder keine Geschwindigkeitskomponente in Richtung der Tür ermittelt bzw. abgeleitet werden kann.

Da bei Verwendung von Distanzsensoren die jeweils absolute Distanz im Raum zu einem dedektierten Objekt gemessen und ermittelt wird, ergeben sich hier im Raum verlaufende Kugelflächen als Abstandsflächen. Um mögliche minimale Verfälschungen bzgl. eines gleichmäßigen Steuerungsverhaltens, beispielsweise bei großgewachsenen Personen (Erwachsenen) im Verhältnis zu kleingewachsenen Personen (Kinder) zu vermeiden, könnten gegebenenfalls die Sensoren tieferliegend an der Wand 5 angebracht sein, so daß sie auch bei geöffneten Türflügeln nicht überdeckt sind, damit diese Distanzsensoren 9, 9' weiterhin wirksam sind, oder ergänzend noch tieferliegende weitere Sensoren vorgesehen sein, so daß unabhängig von der Größe der dedektierten Objekte nicht unterschiedliche Ergebnisse zustande kommen.

Im übrigen kann mittels der Distanzsensoren, auch beispielsweise dann, wenn eine dedektierte Person sich der Tür zunächst genähert hat, die weitere Bewegung aber unterbricht (weil beispielsweise eine zweite Person getroffen wird), im Hinblick auf die sich nicht mehr verändernde Position des dedektierten Objekts und/oder weil die weiterhin ermittelte abgeleitete Größe der Geschwindigkeit in diesem Falle Null wird, über die Auswert- und Steuerungselektronik wiederum eine Schließbewegung der Tür eingeleitet werden. Erst nach erneuter dedektierter Bewegungsaufnahme wird erneut eine Öffnungsbewegung der Tür ausgelöst. Auch dabei kann wieder unterschieden werden, ob die erneute Bewegungsaufnahme von der Tür weg oder auf diese zu gerichtet ist, wobei eine erneute Öffnungsbewegung nur dann ausgelöst wird, wenn die dedektierte Person sich auf die Tür zu bewegt. Genauso könnte aber auch eine Steuerung derart erfolgen, daß, selbst bei Unterbrechung der Bewegung auf eine Tür zu, die Tür solange noch geöffnet gehalten wird, bis die in diesem Beispiel in der Nähe der Tür stehende Person ihren Gang fortgesetzt hat, beispielsweise durch die Tür hindurch oder von dieser weg.

Schließlich wird auch angemerkt, daß durch den einen oder durch mehrere Distanzsensoren auch statische Objekte ermittelt werden können, ohne daß dies zu einer Verfälschung des Ergebnisses beiträgt.

Die Sensoren sind so angeordnet, daß sie mit der ihnen zugeordneten Auswert- und Steuerungselektronik so zusammenarbeiten, daß die Stellung der Türflügel - insbesondere auch während der Schließbewegung der Türflügel - selbst zu keiner Verfälschung der Meßergebnisse beitragen.

## Patentansprüche

1. Verfahren zur Ansteuerung und/oder Überwachung eines angetriebenen Flügels (1a, 1b), insbesondere einer Tür (1), eines Fensters oder dgl., mit einer kamerafreien Sensoreinrichtung (9, 9', 9a, 9b) zur Überwachung und Erfassung eines zumindest einem Flügel (1a, 1b) zugeordneten Überwachungs- und Auslösebereiches (19, 19', 19''), **dadurch gekennzeichnet**, daß die Öffnungsbewegung eines Flügels (1a, 1b) sowie eine Unterbrechung des Schließvorganges des Flügels (1a, 1b) und/oder eine Umsteuerung hin zu einer erneuten Öffnungsbewegung desselben in Abhängigkeit des gemessenen und/oder ermittelten Abstandes (X) zwischen dem im Überwachungsbereich (19) dedektierten Objekt und der Sensoreinrichtung (9, 9', 9a, 9b) bzw. dem Flügel (1a, 1b) oder der Flügelebene erfolgt, wobei für die Sensoreinrichtung (9, 9', 9a, 9b) zumindest ein Distanzsensor und/oder zwei versetzt zueinander liegende Sensoren oder Distanzsensoren (9, 9', 9a, 9b) verwendet werden.

2. Verfahren nach dem Oberbegriff des Anspruches 1 oder Anspruch 1, **dadurch gekennzeichnet**, daß die Öffnungsbewegung des Flügels (1a, 1b) sowie eine Unterbrechung des Schließvorganges des Flügels (1a, 1b) und/oder eine Umsteuerung hin zu einer erneuten Öffnungsbewegung desselben in Abhängigkeit des gemessenen und ermittelten Bewegungsvektors (49, 51), d.h. der Bewegungsrichtung oder einer Komponente davon, des im Überwachungsbereich (19) dedektierten Objektes bezogen auf die Sensoreinrichtung (9, 9', 9a, 9b), den zumindest einen Flügel (1a, 1b) oder die Flügelebene erfolgt, wobei für die Sensoreinrichtung (9, 9', 9a, 9b) zumindest ein Distanzsensor und/oder zwei versetzt zueinander liegende Sensoren oder Distanzsensoren (9, 9', 9a, 9b) verwendet werden.

3. Verfahren nach dem Oberbegriff des Anspruches 1 oder Anspruch 1 oder 2, **dadurch gekennzeichnet**, daß die Öffnungsbewegung des Flügels (1a, 1b) sowie eine Unterbrechung des Schließvorganges des Flügels (1a, 1b) und/oder eine Umsteuerung hin zu einer erneuten Öffnungsbewegung desselben in Abhängigkeit der Größe der Abstandsänderung in der Zeiteinheit zwischen der Sensoreinrichtung (9, 9', 9a, 9b), dem Flügel (1a, 1b) oder der Flügelebene zum einen und dem dedektierten Objekt zum anderen gemessen oder ermittelt wird, insbesondere in zusätzlicher Abhängigkeit von der endgültigen Bewegungsrichtung des dedektierten Objekts bezogen auf die Sensoreinrichtung (9, 9', 9a, 9b), den zumindest einen Flügel (1a, 1b) oder die Flügelebene, wobei für die Sensoreinrichtung (9, 9', 9a, 9b) zumindest ein Distanzsensor und/oder zwei versetzt zueinander liegende Sensoren oder Distanzsensoren (9, 9', 9a, 9b) verwendet werden.

4. Verfahren nach einem der Ansprüche 1 bis 3, **dadurch gekennzeichnet**, daß zumindest zwei in Draufsicht auf den Überwachungs- und Auslösebereich (19, 19', 19'') versetzt zueinander liegende Sensoreinrichtungen (9a, 9b) in Form von Distanzsensoren verwendet werden.

5. Verfahren nach einem der Ansprüche 1 bis 3, **dadurch gekennzeichnet**, daß zumindest zwei in Draufsicht auf den Überwachungs- und Auslösebereich (19, 19', 19'') versetzt zueinander liegende Sensoreinrichtungen (9a, 9b) in Form von einem Distanzsensor und einem Richtungserkennungssensor verwendet werden.

6. Vorrichtung zur Ansteuerung und/oder Überwachung eines angetriebenen Flügels (1a, 1b), insbesondere einer Tür (1), eines Fensters oder dergleichen, mit einer Sensoreinrichtung (9, 9', 9a, 9b) zur Überwachung und/oder Erfassung eines zumindest einem Flügel (1a, 1b) zugeordneten Überwachungs- und Auslösebereiches (19, 19', 19''), mit einer Auswert- und/oder Steuerungsstufe (23, 23', 23'', 25; 24), worüber die von der Sensoreinrichtung (9, 9', 9a, 9b) kommenden Daten ausgewertet werden, und mit einer motorischen Antriebseinrichtung (27) zur Bewegung des Flügels (1a, 1b), insbesondere nach einem der Ansprüche 1 bis 5, **dadurch gekennzeichnet**, daß die Sensoreinrichtung (9, 9', 9a, 9b) zumindest einen Distanzsensor und/oder zwei versetzt zueinander liegende Sensoren oder Distanzsensoren (9, 9', 9a, 9b) umfaßt, mittels dessen bzw. deren der Abstand zwischen einem dedektierten Objekt im Überwachungsbereich (19, 19', 19'') und der Sensoreinrichtung (9, 9', 9a, 9b), dem Flügel (1a, 1b) oder der Flügelebene meß- oder ermittelbar ist und in Abhängigkeit davon die Öffnungsbewegung des Flügels (1a, 1b), eine Unterbrechung des Schließvorganges des Flügels (1a, 1b) und/oder eine Umsteuerung hin zu einer erneuten Öffnungsbewegung desselben steuerbar ist.

7. Vorrichtung nach dem Oberbegriff des Anspruches 6 oder Anspruch 6, **dadurch gekennzeichnet**, daß die Sensoreinrichtung (9, 9', 9a, 9b) zumindest einen Distanzsensor und/oder zwei versetzt zueinander liegende Sensoren oder Distanzsensoren (9, 9', 9a, 9b) umfaßt, mittels dessen bzw. deren der Bewegungsvektor (49, 51), d.h. der Bewegungsrichtung oder einer Komponente davon des im Überwachungsbereich dedektierten Objektes bezogen auf die Sensoreinrichtung (9, 9', 9a, 9b), den zumindest einen Flügel (1a, 1b) oder die Flügelebene meß- oder ermittelbar ist und in Abhängigkeit davon die Öffnungsbewegung des Flügels (1a, 1b), eine Unterbrechung des Schließvorganges des Flügels (1a, 1b) und/oder eine Umsteuerung hin zu einer erneuten Öffnungsbewegung desselben steuerbar ist.

8. Vorrichtung nach dem Oberbegriff des Anspruches 6 oder Anspruch 6 und 7, **dadurch gekennzeichnet**, daß die Sensoreinrichtung (9, 9', 9a, 9b) zumindest einen Distanzsensor und/oder zwei versetzt zueinander liegende Sensoren oder Distanzsensoren (9, 9', 9a, 9b) umfaßt, mittels dessen bzw. deren die Größe der Abstandsänderung in der Zeiteinheit zwischen der Sensoreinrichtung (9, 9', 9a, 9b), dem Flügel (1a, 1b) oder der Flügelebene zum einen und dem dedektierten Objekt zum anderen meßbar oder ermittelbar ist, und zwar insbesondere in zusätzlicher Abhängigkeit von der endgültigen Bewegungsrichtung des dedektierten Objekts bezogen auf die Sensoreinrichtung (9, 9', 9a, 9b), den zumindest einen Flügel (1a, 1b) oder die Flügelebene, und daß in Abhängigkeit davon die Bewegungsrichtung des Flügels (1a, 1b), eine Unterbrechung des Schließvorganges des Flügels (1a, 1b) und/oder eine Umsteuerung hin zu einer erneuten Öffnungsbewegung desselben steuerbar ist.

9. Vorrichtung nach einem der Ansprüche 6 bis 8, **dadurch gekennzeichnet**, daß zumindest zwei in Draufsicht auf den Überwachungs- und Auslösebereich (19, 19', 19'') versetzt zueinanderliegende Sensoreinrichtungen (9a, 9b) in Form von Distanzsensoren vorgesehen sind.

10. Vorrichtung nach einem der Ansprüche 7 bis 9, **dadurch gekennzeichnet**, daß zumindest zwei in Draufsicht auf den Überwachungs- und Auslösebereich (19, 19', 19'') versetzt zueinanderliegende Sensoreinrichtungen (9a, 9b) vorgesehen sind, von denen zumindest einer aus einem Distanzsensor und zumindest ein weiterer aus einem Richtungserkennungssensor besteht.

11. Vorrichtung nach Anspruch 9 oder 10, **dadurch gekennzeichnet**, daß die zumindest beiden Sensoren (9a, 9b) symmetrisch zur Türmitte angeordnet sind.

12. Vorrichtung nach einem der Ansprüche 7 bis 11, **dadurch** **gekennzeichnet**, daß mittels der Auswert- und/oder Steuerungselektronik (23, 23', 23'', 25; 24) derart erfolgt, daß eine Auslösezone (19', 19'') in einer beliebig vorwählbaren Umrißlinie mathematisch vorgegeben ist.

13. Vorrichtung nach Anspruch 12, **dadurch gekennzeichnet**, daß die Auslösezone (19', 19'') polygonale Umfangsformen aufweist.

14. Vorrichtung nach einem der Ansprüche 7 bis 13, **dadurch gekennzeichnet**, daß die Auslösezone (19', 19'') kleiner ist als die die Auslösezone umfassende Überwachungszone (19).

15. Vorrichtung nach einem der Ansprüche 7 bis 14, **dadurch gekennzeichnet**, daß in Abhängigkeit des dedektierten Objekts und damit in Abhängigkeit des dedektierten Aufenthaltsortes, der Bewegungsrichtung, der Geschwindigkeit in Bewegungsrichtung oder in einer Komponente insbesondere quer zur Türdurchlaßebene und/oder in Abhängigkeit zur Bewegungsgeschwindigkeit unterschiedlich geformt ist und/ oder unterschiedliche Größe, Abmessung und/oder eine unterschiedliche Lage aufweist.
